# EUROPÄISCHE PATENTANMELDUNG

(11) **EP 1 464 539 A2**
(43) Veröffentlichungstag der Anmeldung: **06.10.2004**
(21) Anmeldenummer: 04003218.7
(22) Anmeldetag: 13.02.2004
(51) Int. Cl.: B60Q 1/04

(54) **Ausrichtvorrichtung für einen Scheinwerfer**

(30) Priorität: 03.04.2003 DE 10315140
(71) Anmelder: Dr.Ing. h.c.F. Porsche Aktiengesellschaft, 70435 Stuttgart (DE)
(72) Erfinder: Steinbeck, Herbert, 7541 Mühlacker (DE); Weiner, Hans, 75417 Mühlacker (DE)

(57) **Zusammenfassung**

Eine Ausrichtvorrichtung (1) für einen Scheinwerfer im Fahrzeugaufbau eines Kraftfahrzeugs umfasst ein Einstellelement (E), das zwischen dem Fahrzeugaufbau (16) und einem Tragteils (7) des Scheinwerfers angeordnet ist. Das Einstellelement (E) besteht aus einem zwischen Halteteilen (3,4) über eine Stellschraube (5) eingespannten elastischen Ring (6), der sich in einer Ringhülse (R) des Tragteils (7) abstützt und die Stellschraube (5) am Fahrzeugaufbau (16) in einer Gewindemutter (13,14) gehalten ist.

## Beschreibung

Die Erfindung bezieht sich auf eine Ausrichtvorrichtung für einen Scheinwerfer im Fahrzeugaufbau eines Fahrzeuges nach dem Oberbegriff des Anspruchs 1.

Aus der DE 40 17 701 A1 ist eine Einstellvorrichtung für ein Gehäuse eines Scheinwerfers in einem Kraftfahrzeug bekannt, welche ein Halteelement in einem Haltering des Scheinwerfers und ein durch das Halteelement hindurchtretendes Befestigungselement umfasst. Das Halteelement ist zum Ausgleich von Maßtoleranzen der Karosserieteile in verschiedenen Positionen festlegbar.

Die Aufgabe der Erfindung besteht darin, eine Ausrichtvorrichtung für einen Scheinwerfer in einem Kraftfahrzeug zu schaffen, die ohne Aufwand zu montieren und über die eine ausgerichtete Lage des Scheinwerfers in einer Karosserieaufnahme in einfacher Weise durchführbar ist.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, dass die Scheinwerfer im Kraftfahrzeug genau ausgerichtet einbaubar sind. Hierzu ist nach der Erfindung in vorteilhafter Weise vorgesehen, dass das Einstellelement aus einem zwischen Halteteilen über eine Stellschraube eingespannten elastischen Ring besteht, der sich in einer Ringhülse des Trageteils abstützt und die Stellschraube am Fahrzeugaufbau in einer Gewindemutter in möglichen Einstellpositionen des Scheinwerfers gehalten ist. Hierdurch wird in vorteilhafter Weise erreicht, dass der Scheinwerfer in seiner Aufnahme im Kotflügel mit einem genauen, gleichmäßigen Fugenverlauf einsetzbar und in dieser Position über die Ausrichtvorrichtung am Fahrzeugaufbau festsetzbar ist.

Damit eine funktionssichere Vorrichtung geschaffen wird, ist nach der Erfindung des weiteren vorgesehen, dass die Halteteile aus zwei Hülsen bestehen, die koaxial zueinander angeordnet und ineinander verschiebbare Hülsenabschnitte aufweisen und zwischen gegenüberliegenden Flanschen der Hülsen der elastische Ring eingespannt angeordnet ist, wobei in die eine dem Fahrzeugaufbau zugerichteten Hülse ein Hülsenabschnitt der weiteren Hülse eingesteckt gehalten wird, an welche sich stirnseitig über eine Scheibe die Stellschraube abstützt. Die Stellschraube ist an einem abgestellten Schenkel des Fahrzeugaufbaus in einer Gewindemutter, beispielsweise in einer Schnappmutter oder in einer Annietmutter befestigbar.

Der elastische Ring der Vorrichtung ist nach der Erfindung in Abhängigkeit von einer Presskraft der Hülsenflansche mittels der Stellschraube radial verspannbar ausgeführt, so dass die Stellschraube bei der Anordnung in verschiedenen möglichen Winkellagen, entsprechend der "richtigen" Position des Scheinwerfers festsetzbar ist. Es wird hierdurch ein Zusammendrücken des elastischen Ringes und somit ein radiales Herausquellen dieses Ringes zur Erzielung einer Haltekraft bzw. Klemmkraft in der Ringhülse des Tragteils ermöglicht.

Damit in einfacher Weise die Stellschraube über ein Werkzeug schraubbar ist, weist der Schraubenkopf einen Außensechskant und zusätzlich einen Innensechskant auf. Des weiteren ist das freie Ende der Stellschraube mit einem Sechskantabschnitt versehen, damit auch von dieser Seite her die Stellschraube verdrehbar ist, was erforderlich wird, wenn der Schraubenkopf vom Werkzeug nicht erreichbar ist.

Nach einer weiteren Ausführung der Erfindung kann der elastische Ring im Einstellelement zwischen zwei L-förmigen Halteteilen angeordnet sein und zwischen auf einer Stellschraube gehaltenen Spannscheiben eingespannt gehalten werden. Der elastische Ring des Einstellelements ist in einem in einer Ringhülse des Tragteils gehaltenem vorgesetzten Aufnahmetopf angeordnet. Zwischen den Halteteilen ist ein Spalt vorgesehen, damit der elastische Ring zusammengedrückt werden kann. Bei dieser Ausführung sind die Spannscheiben des Einstellelements einerseits am Schraubenkopf der Stellschraube und andererseits an einer zwischengesetzten Distanzhülse anliegend, welche sich mit ihren der Spannscheibe abgekehrten Ende an einem abgestellten Schenkel des Fahrzeugaufbaus abstützt. Bei dieser weiteren Ausführung ist die Ausrichtvorrichtung des Scheinwerfers in der Funktion entsprechend der Ausführung gemäß des Patentanspruchs 1 und den weiteren Patentansprüchen gegeben, wobei durch den in das Tragteil des Scheinwerfers einschraubbaren Aufnahmetopf in einfacher Weise auch ein nachträglicher Einbau in vorhandene Systeme möglich wird.

Nach einer weiteren Ausführung der Erfindung können zwischen zwei Spannscheiben oder einer Spannscheibe des Einstellelements und dem Schraubenkopf der Spannschraube mindestens zwei einander zugerichtete Tellerfedern angeordnet sein, die sich radial bis zur Innenwandfläche der Ringhülse des Tragteils für den Scheinwerfer erstrecken.

Des weiteren ist nach einer weiteren Ausführungsform zwischen zwei divergierend zueinander angeordneten Tellerfedern im Einstellelement der elastische Ring angeordnet und die Tellerfedern sind an der Spannscheibe anliegend.

Ausführungsbeispiele der Erfindung sind in den Zeichnungen dargestellt und werden im folgenden näher beschrieben.

Es zeigen:
- Fig. 1: einen Schnitt durch eine in Fahrtrichtung gesehen, vordere eingebaute Ausrichtvorrichtung mit zwischen Flanschen von Halteteilen, wie Hülsen, eingespannten elastischen Ring,
- Fig. 2: einen Schnitt durch die - in Fahrtrichtung gesehen - eingebaute hintere Ausrichtvorrichtung,
- Fig. 3: einen Schnitt durch die ausgebaute Ausrichtvorrichtung,
- Fig. 4: eine Draufsicht auf ein Tragteil für den Scheinwerfer mit vier Ausrichtvorrichtungen,
- Fig. 5: einen Schnitt durch eine weitere Ausführung einer Ausrichtvorrichtung mit einem schwimmend gelagerten elastischen Ring,
- Fig. 6: einen Schnitt durch eine weitere Ausrichtvorrichtung mit eingespannten Tellerfedern,
- Fig. 7: einen Schnitt durch eine weitere Ausrichtvorrichtung mit eingespannten Tellerfedern und zwischenliegendem elastischen Ring und
- Fig. 8: eine Ausführung gem. Fig. 3 aus Kunststoff.

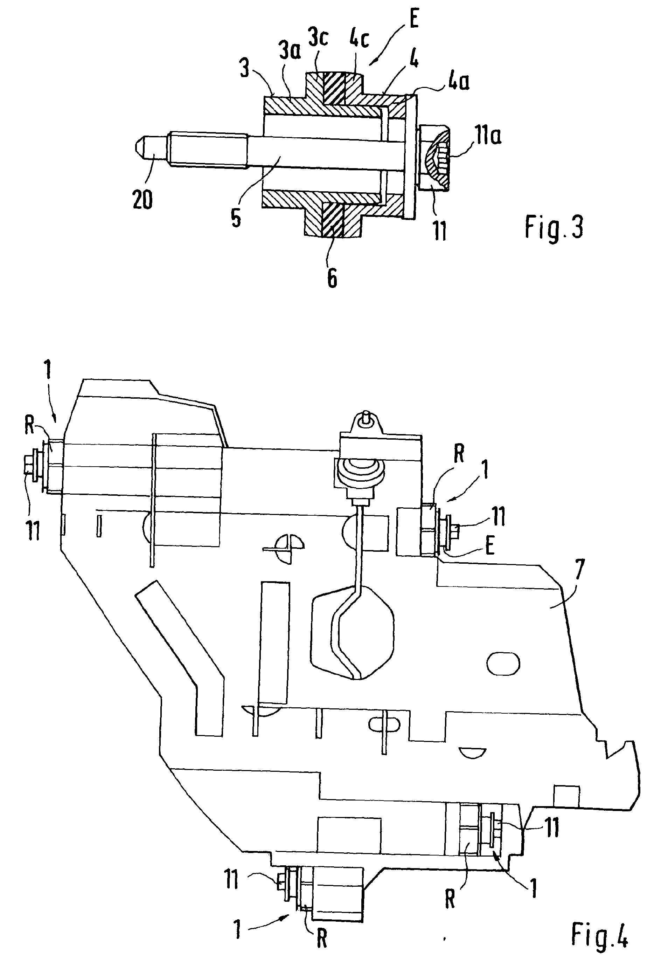

Eine Ausrichtvorrichtung 1 für einen Scheinwerfer eines Kraftfahrzeugs in einem Ausschnitt eines Kotflügels besteht aus einem Einstellelement E, das aus einem zwischen zwei Halteteilen 3, 4 über eine Stellschraube 5 eingespannten elastischen Ring 6 besteht. Die Vorrichtung 1 ist in einer Ringhülse R eines Tragteils 7 für den Scheinwerfer S angeordnet. Insgesamt sind vier Ausrichtvorrichtungen 1 im Tragteil 7 vorgesehen, wie Fig. 4 näher zeigt.

Die Halteteile bestehen im wesentlichen aus zwei Hülsen 3 und 4, die koaxial zueinander angeordnet sind und deren Hülsenabschnitte 3a und 4a ineinander schiebbar ausgebildet sind, wozu der eine Hülsenabschnitt 4a der Hülse 4 in den Hülsenabschnitt 3a der weiteren Hülse 3 hineinragt. Beide Hülsen 3 und 4 weisen Flansche 3c und 4c auf, zwischen denen der elastische Ring 6 eingespannt und verspannbar gehalten ist. Vorzugsweise weist die Ringhülse R des Tragteils 7 aus Kunststoff (entsprechend dem Tragteil 7) eine eingeschraubte Ringhülse 10 aus Kunststoff oder Metall auf, welche somit unabhängig vom Setzverhalten des Tragteilwerkstoffs 7 ist.

Die Stellschraube 5 stützt sich an der Stirnseite der Hülse 4 über einen Kopf 11 unter Zwischenschaltung einer Scheibe 12 ab. Das freie Ende der Schraube 5 ist über einen Gewindeabschnitt mit einer Gewindemutter, wie beispielsweise einer Metallschnappmutter 13 oder einer Annietmutter 14 an einem Schenkel 15 des Fahrzeugaufbaus 16 festgelegt.

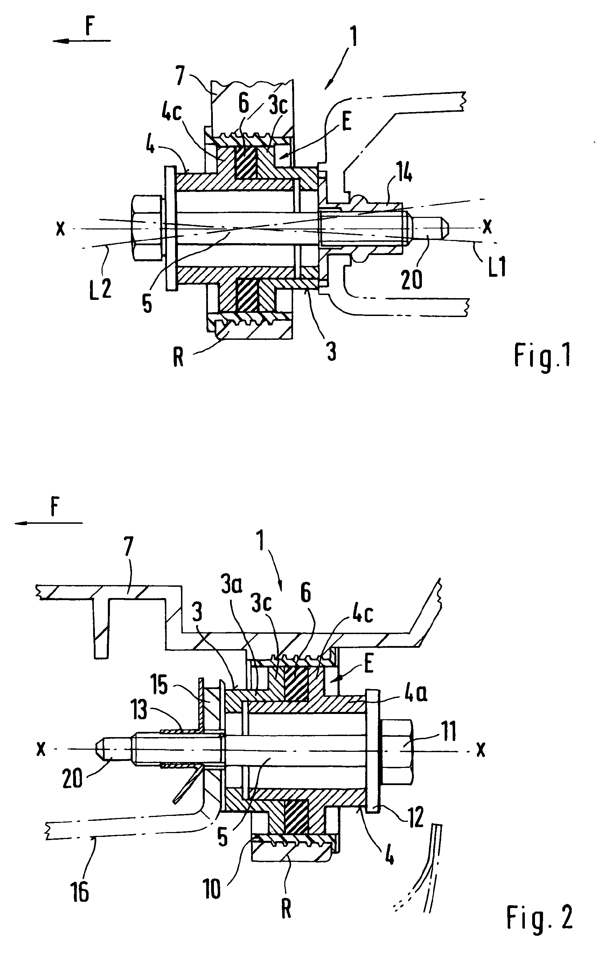

Zum Ausrichten den Scheinwerfers in seiner Aufnahme im Kotflügel, wird der mit dem Tragteil 7 verbundene Scheinwerfer in einer "richtigen" Position gehalten und die Stellschraube 5 wird dann angezogen, wobei der elastische Ring 6 über die Flansche 3c, 4c derart verspannt wird, dass sich der Ring 6 gegen die Innenwandung der Ringhülse 10 pressen kann. Die Lage der Stellschraube 7 kann von der gezeigten Lage in der Ebene x - x abweichen, wie beispielsweise die strichpunktierten Linien L1 und L2 in Fig. 1 zeigen. Eine solche Lage der Stellschraube 5 tritt ein, wenn beispielsweise der Schenkel 15 des Fahrzeugaufbaus 16 nicht rechtwinklig zum Tragteil steht bzw. der Fugenverlauf im Ausschnitt des Fahrzeugaufbaus aus anderen Gründen nicht gleichmäßig ist. Der Winkel-Einstellbereich der Schraube 7 ist von dem Freiraum mit dem Maß a und b bestimmt, wie in Fig. 1 eingezeichnet. Der axiale Einstellbereich X, X1 wird von den Hülsen 3 und 4 bestimmt.

Die Lage der Teile 3 und 4 kann gegeneinander getauscht werden, da das Spannelement funktional symmetrisch ist (Petajoke). Die Stellschraube 5 weist einen Sechskant am Kopf 11 sowie einen Innensechskant 11a auf. Ferner ist das freie Ende der Stellschraube 5 mit einem Außensechskant 20 versehen, damit die Stellschraube 5 auch von diesem Ende aus über eine Werkzeug angezogen werden kann.

Gemäß der Ausführung nach Fig. 8 sind die Hülsen 3, 4 aus Kunststoff und die Halteschale 7 besteht ebenfalls aus Kunststoff, wobei keine Armierung bzw. ein Einsatz 10 vorgesehen ist.

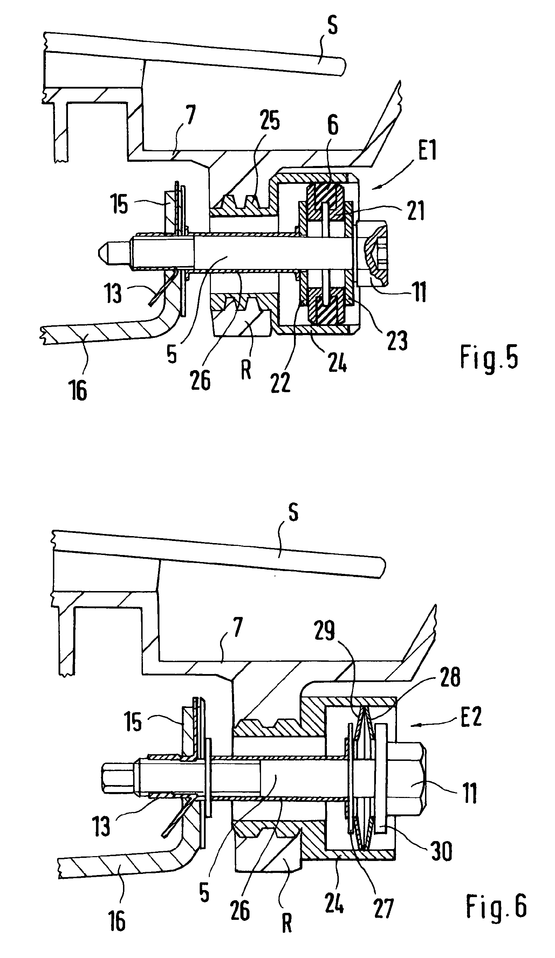

Nach einer weiteren Ausführung gemäß Fig. 5 ist beim Einstellelement E1 der elastische Ring 6 zwischen zwei L-förmigen Halteteilen 21 angeordnet, das zwischen auf der Stellschraube 5 gehaltenen Spannscheiben 22, 23 gelagert ist. Eine Abstützung der einen Spannscheibe 23 erfolgt am Schraubenkopf 12, wobei die andere Spannscheibe 22 sich an einem Ende der Distanzhülse 26 abstützt, und das abgekehrte freie Ende der Distanzhülse 26 am Schenkel 15 des Fahrzeugaufbaus 16 anliegt. Zwischen den beiden Halteteilen 21 ist ein Spalt vorgesehen, der ein Zusammendrücken des elastischen Ringes 6 ermöglicht.

Bei dieser Ausführung gemäß Fig. 5 ist der Aufnahmetopf 24 mit einem Topfansatz 25 versehen, der in die Ringhülse R des Tragelement 7 für den Scheinwerfer S einschraubbar bzw. einsetzbar ist. Der Aufnahmetopf 24 ist der Ringhülse R vorgesetzt. Durch ein Anziehen der Spannschraube 5 wird ein Festklemmen des elastischen Ringes 6 im Aufnahmetopf 24 gewährleistet.

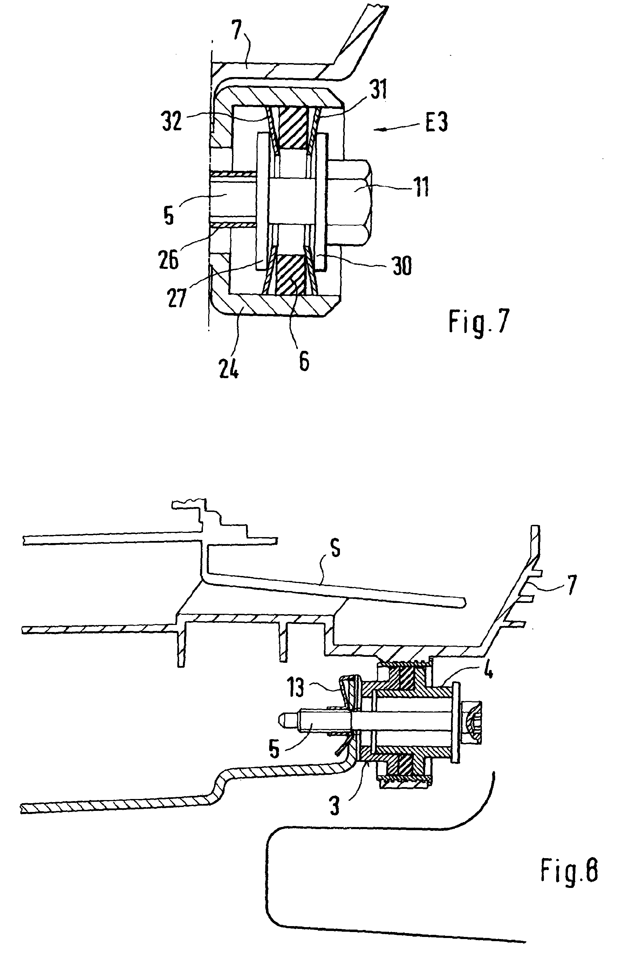

Nach einer weiteren Ausführung gemäß Fig. 6 sind beim Einstellelement E2 im Aufnahmetopf 24 zwischen einer Spannscheibe 30 der Stellschraube 5 und einer an der Distanzhülse 26 abgestützten weiteren Spannscheibe 27 gegeneinander gerichtete Tellerfedern 28, 29 eingespannt gehalten, die sich an der Innenfläche des Aufnahmetopfes 24 abstützen und nach einem Anziehen der Stellschraube 5 ein Festsetzen der Ausrichtvorrichtung E2 bewirken. Der Aufnahmetopf 24 ist entsprechend der Ausführung gemäß Fig. 5 ausgeführt und im Tragteil 7 des Scheinwerfers S befestigt und auch die Stellschraube 5 ist entsprechend der Ausführung gemäß Fig. 5 mit dem Fahrzeugaufbau 16 verbunden.

Nach einer weiteren Ausführung gemäß Fig. 7 sind beim Einstellelement E3 zwischen der Spannscheibe 27 und der Spannscheibe 30 zwei Tellerfedern 31, 32 angeordnet, die zwischen sich den elastischen Ring 6 aufweisen. Diese Tellerfedern 31, 32 sind divergierend zueinander angeordnet. Bei einem Anziehen der Stellschraube 5 werden die Tellerfedern 31, 32 und der zwischenliegende elastische Ring 6 vorgespannt und bewirken eine Klemmung der Vorrichtung E3 im Aufnahmetopf 24.

Der Stützring bzw. die abgestimmten Spalten bewirken zum einem, dass die Stellschraube 5 "auf Block" angezogen wird - Schwinden des Gummiringes bewirkt kein Lockern der Schraubverbindung - und verhindert andererseits ein Zerquetschen des Gummiringes.

Durch die selbsttätige Einstellung, ohne Verspannung, wird ebenso eine gleichmäßige Belastung der Vier-Punkt-Lagerung (besser Dämpfung) erreicht.

## Patentansprüche

1. Ausrichtvorrichtung für einen Scheinwerfer im Fahrzeugaufbau eines Kraftfahrzeugs mit einem Einstellelement, das zwischen dem Fahrzeugaufbau und einem Tragteil des Scheinwerfers angeordnet ist, **dadurch gekennzeichnet, dass** das Einstellelement (E) aus einem zwischen Halteteilen (3, 4) über eine Stellschraube (5) eingespannten elastischen Ring (6) besteht, der sich in einer Ringhülse (R) des Tragteils (7) abstützt und die Stellschraube (5) am Fahrzeugaufbau (16) in einer Gewindemutter (13 oder 14) in mehreren möglichen Einstellpositionen des Scheinwerfers (S) gehalten ist.

2. Vorrichtung nach Anspruch 1, **dadurch gekennzeichnet, dass** die Halteteile aus zwei Hülsen (3, 4) bestehen, die koaxial zueinander angeordnet und ineinander verschiebbare Hülsenabschnitte (3a, 4a) aufweisen und zwischen gegenüberstehenden Flanschen (3c, 4c) der Hülsen (3, 4) der elastische Ring (6) eingespannt angeordnet ist.

3. Vorrichtung nach den Ansprüchen 1 oder 2, **dadurch gekennzeichnet, dass** in die eine dem Fahrzeugaufbau (16) zugerichteten Hülse (3) ein Hülsenabschnitt (4a) der weiteren Hülse (4) eingesteckt gehalten ist, an welche sich stirnseitig über eine Scheibe (12) die Stellschraube (5) abstützt.

4. Vorrichtung nach den Ansprüchen 1, 2 oder 3, **dadurch gekennzeichnet, dass** die Stellschraube (5) an einem abgestellten Schenkel (15) des Fahrzeugaufbaus (16) in einer Schnappmutter (13) oder in einer Annietmutter (14) befestigbar ist.

5. Vorrichtung nach den Ansprüchen 1, 2, 3 oder 4, **dadurch gekennzeichnet, dass** der elastische Ring (6) in Abhängigkeit von einer Presskraft der Hülsenflansche (3c, 4c) radial vorspannbar ausgeführt ist.

6. Vorrichtung nach einem der vorhergehenden Ansprüche, **dadurch gekennzeichnet, dass** in die aus einem Kunststoff bestehende Ringhülse (R) des Tragteils (7) für den Scheinwerfer (S) eine Ringhülse (10) aus Kunststoff oder Metall einsetzbar ist, an der sich der elastische Ring (6) radial abstützt.

7. Vorrichtung nach einem der vorhergehenden Ansprüche, **dadurch gekennzeichnet, dass** die Stellschraube (5) einen Sechskantkopf (11) mit einem Innensechskant (11a) aufweist und das freie Schraubenende einen Sechskantabschnitt (20) besitzt.

8. Vorrichtung nach einem der vorhergehenden Ansprüche, **dadurch gekennzeichnet, dass** am Tragteil (7) für den Scheinwerfer (S) wenigstens vier Einstellelemente (E; E1; E2, E3) angeordnet sind.

9. Ausrichtvorrichtung für einen Scheinwerfer eines Kraftfahrzeugs im Fahrzeugaufbau mit einem Einstellelement, das zwischen dem Fahrzeugaufbau und einem Tragteil des Scheinwerfers angeordnet ist, **dadurch gekennzeichnet, dass** zwischen zwei im Querschnitt L-förmigen Halteteilen (21) des Einstellelements (E1) der elastische Ring (6) angeordnet und zwischen auf der Stellschraube (5) gehaltenen Spannscheiben (22, 23) einspannbar gehalten ist.

10. Vorrichtung nach Anspruch 9, **dadurch gekennzeichnet, dass** der elastische Ring (6) des Einstellelements (E1) in einem in einer Ringhülse (R) des Tragteils (7) gehaltenen und vorgesetzten Aufnahmetopf (24) angeordnet ist.

11. Vorrichtung nach den Ansprüchen 9 oder 10, **dadurch gekennzeichnet, dass** die Spannscheiben (22, 23) des Einstellelements (E1) einerseits am Schraubenkopf (11) der Stellschraube (5) und andererseits an einer zwischengesetzten Distanzhülse (26) anliegen, und welche sich mit ihrem der Spannschraube (22) abgekehrten Ende am abgestellten Schenkel (15) des Fahrzeugaufbaus (16) abstützt.

12. Vorrichtung nach Anspruch 11, **dadurch gekennzeichnet, dass** der der Ringhülse (R) vorgesetzte Aufnahmetopf (24) einen Gewindetopfabschnitt (25) aufweist, der in die Ringhülse (R) des Tragteils (7) einschraubbar ist.

13. Ausrichtvorrichtung für einen Scheinwerfer eines Kraftfahrzeugs im Fahrzeugaufbau mit einem Einstellelement, das zwischen dem Fahrzeugaufbau und einem Tragteil des Scheinwerfers angeordnet ist, **dadurch gekennzeichnet, dass** zwischen zwei Spannscheiben (27 und 30) oder einer Spannscheibe (27) des Einstellelements (E2) und dem Schraubenkopf (11) der Spannschraube (5) mindestens zwei einander zugerichtete Tellerfedern (28, 29) angeordnet sind, die sich radial bis zur Innenwandfläche der Ringhülse (R) des Tragteils (7) erstrecken.

14. Vorrichtung nach Anspruch 13, **dadurch gekennzeichnet, dass** zwischen zwei divergierend zueinander angeordneten Tellerfedern (31, 32) des Einstellelements (E3) der elastische Ring (6) angeordnet ist, und die Tellerfedern (31, 32) an den Spannscheiben (27, 30) anliegend sind.
